# EUROPEAN PATENT APPLICATION

(11) **EP 2 326 045 A1**
(43) Date of publication of application: **25.05.2011**
(21) Application number: 10190626.1
(22) Date of filing: 10.11.2010
(51) Int. Cl.: H04L 12/24

(54) **Method for setting network environment and storage device applying the same**

(30) Priority: 23.11.2009 KR 20090113344
(71) Applicant: Samsung Electronics Co., Ltd., Suwon-si, Gyeonggi-do (KR)
(72) Inventor: Joo, Yu-sung, Gyeonggi-do (KR); Lee, Hee-soo, Gyeonggi-do (KR); Park, Yong-jun, Seoul (KR)
(74) Representative: Hewett, Jonathan Michael Richard

(57) **Abstract**

A method for setting a network environment and a storage device applying the same are provided. The method includes, if a storage device is connected to a first electronic device, executing a specific application stored in the storage device by the first electronic device, setting a network environment of the first electronic device by the specific application, and storing set network environment information of the first electronic device in the storage device by the specific application. Accordingly, a user automatically sets a network of diverse electronic devices using a storage device.

## Description

The present invention relates to setting a network environment for electronic devices and a storage device applying the method, and automatically setting a network environment for electronic devices and a storage device applying the method.

With the development of network communication technology such as the Internet, diverse devices are able to access the Internet or a network. For example, as an internet protocol television (IP TV) has been increasingly introduced in recent years, many TVs which are currently coming into the market employ a wired local area network (LAN) interface or a wireless LAN interface to be able to access a network. Also, with the development of home network technology, diverse home appliances including the TV are able to access a home network. Also, in some situation, a plurality of electronic devices employing a wired LAN or a wireless LAN should be connected to one another to share their data.

As described above, in order for an electronic device to be connected to another device or access a network, a suitable network environment should be set. More specifically, a complicated operation of setting a network such as inputting values of diverse internet protocols is required in order for an electronic device to be connected to another electronic device. However, a general user does not know how to set a network environment in many cases.

The user wishes to easily set a network environment without expertise. Therefore, there is a demand for a method for easily setting a network environment for communication among electronic devices.

Exemplary embodiments of the present invention provide a method for setting a network environment for electronic devices in which, if a storage device is connected to a first electronic device, the first electronic device executes a specific application stored in the storage device, and the specific application sets a network environment of the first electronic device and stores set network environment information of the first electronic device in the storage device, and a storage device applying the same.

According to an aspect of the present invention, a method for setting a network environment includes: if a storage device is connected to a first electronic device, executing a specific application stored in the storage device by the first electronic device, setting a network environment of the first electronic device by the specific application, and storing set network environment information of the first electronic device in the storage device by the specific application.

The method may further include: if the storage device is connected to a second electronic device after being connected to the first electronic device, executing the specific application by the second electronic device, setting a network environment of the second electronic device based on the network environment information of the first electronic device by the specific application, and storing set network environment information of the second electronic device by the specific application.

The method may further include receiving a first key from the first electronic device by the application, and receiving a second key from the second electronic device by the application, and, in the operation of setting the network environment of the second electronic device, if the first key and the second key are the same, the specific application may set the network environment of the second electronic device such that the second electronic device belongs to the same network as that of the first electronic device.

The method may further include setting a group of the first electronic device and a group of the second electronic device by the application.

The method may further include receiving a first key from the first electronic device by the application, and receiving a second key from the second electronic device by the application, and, in the operation of setting the group, if the first key and the second key are the same, the application may set the first electronic device and the second electronic device to belong to the same group.

The network environment information may include at least one of a set IP address, gateway information, sub-net mask information, domain name service (DNS) server information, extended service set identification (ESSID), a wireless mode, a network type, authentication mode information, authentication type information, and authentication key information.

The storage device may be a USB memory or a flash memory card.

The network environment may be a wireless LAN network environment.

According to another aspect of the present invention, a storage device stores a specific application for executing a method for setting a network environment, the method including: if the storage device is connected to a first electronic device, setting a network environment of the first electronic device; and storing network environment information of the first electronic device in the storage device.

The method may further include: if the storage device is connected to a second electronic device after being connected to the first electronic device, setting a network environment of the second electronic device based on the network environment information of the first electronic device; and storing set network environment information of the second electronic device in the storage device.

The method may further include: receiving a first key from the first electronic device; and receiving a second key from the second electronic device, and the operation of setting the network environment of the second electronic device may set the network environment of the second electronic device such that the second electronic device belongs to the same network as that of the first electronic device if the first key and the second key are the same.

The method may further include setting a group of the first electronic device and a group of the second electronic device.

The method may further include: receiving a first key from the first electronic device, and receiving a second key from the second electronic device, and the operation of setting the group may set the first electronic device and the second electronic device to belong to the same group if the first key and the second key are the same.

The network environment information may include at least one of a set IP address, gateway information, sub-net mask information, DNS server information, ESSID, a wireless mode, a network type, authentication mode information, authentication type information, and authentication key information.

The storage device may be a USB memory or a flash memory card.

The network environment may be a wireless LAN network environment.

Additional aspects and advantages of the exemplary embodiments will be set forth in the detailed description, will be obvious from the detailed description, or may be learned by practicing the exemplary embodiments.

The above and/or other aspects of the exemplary embodiments will be more apparent by describing in detail exemplary embodiments thereof, with reference to the accompanying drawings in which:
FIG. 1 is a view illustrating a storage device which automatically sets a network of a first electronic device and a second electronic device according to an exemplary embodiment;
FIG. 2 is a block diagram illustrating a first electronic device, a second electronic device and a storage device according to an exemplary embodiment;
FIGS. 3A and 3B are flowcharts illustrating a method for setting a network environment by an auto-setting application stored in a storage device according to an exemplary embodiment;
FIGS. 4A to 4G are views illustrating a process of automatically setting a network environment of a first electronic device and a second electronic device using an application of a storage device such that the first electronic device and the second electronic device are shared with each other according to an exemplary embodiment;
FIGS. 5A to 5C are views illustrating a case where different keys are input to a first electronic device and a second electronic device according to an exemplary embodiment; and
FIG. 6 is a view illustrating a network environment which is set using a storage device to connect electronic devices within a home and an office according to an exemplary embodiment.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

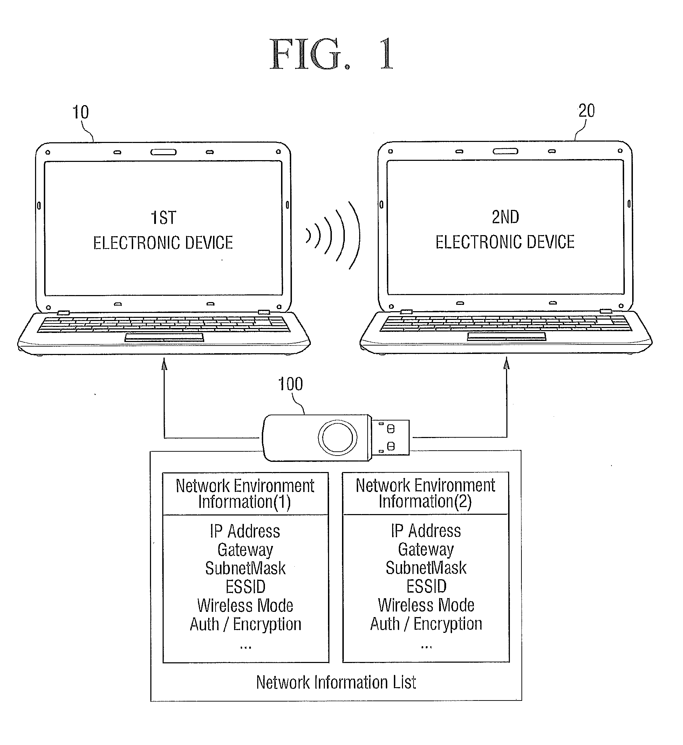

FIG. 1 is a view illustrating a storage device 100 which automatically sets a network environment of a first electronic device 10 and a second electronic device 20 according to an exemplary embodiment.

As shown in FIG. 1, the storage device 100 can be connected to the first electronic device 10 and the second electronic device 20. The storage device 100 stores an auto-setting application. The auto-setting application refers to an application which performs a function of automatically setting a network environment of an electronic device. The auto-setting application is automatically executed by the first electronic device 10 if the storage device 100 is connected to the first electronic device 10, and is automatically executed by the second electronic device 20 if the storage device 100 is connected to the second electronic device 20.

The storage device 100 also stores diverse network environment information. The network environment information recited herein refers to information which is necessary for setting a network environment of an electronic device. More specifically, the network environment information includes at least one of a set IP address, gateway information, sub-net mask information, domain name service (DNS) server information, extended service set identification (ESSID), a wireless mode, a network type, authentication mode information, authentication type information, and authentication key information, but is not limited thereto. The network environment information may be information which is necessary for setting a transmission control protocol/internet protocol (TCP/IP) and a data link. The network recited herein may be a network using a wired local area network (LAN) or a wireless LAN, and also may be a network using any other interface.

The storage device 100 may store the network environment information for each electronic device. That is, if the auto-setting application of the storage device 100 sets a network environment of a single electronic device, the storage device 100 stores network environment information of the single electronic device. Also, the storage device 100 may establish a network environment information database (DB) based on a plurality of pieces of network environment information. Accordingly, based on the stored network environment information, the auto-setting application of the storage device 100 can manage the network environment information of electronic devices in which a network has already been set and can also set a network environment for a new electronic device.

The storage device 100 may be a universal serial bus (USB) memory or a flash memory card. The flash memory card may be a compact flash (CF) card, a secure digital (SD) card, a memory stick (MS) card, a multi media card (MMC), an extreme digital (XD) card, a smart media (SM) card, and a TransFlash (TF) card. The USB memory may be mounted to a USB port of the first electronic device 10 and the second electronic device 20. The flash memory card may be inserted into a card reader employed in the first electronic device 10 and the second electronic device 20. Any storage medium can be applied if it can store the auto-setting application and the network environment information.

As shown in FIG. 1, if the storage device 100 is connected to the first electronic device 10, a network environment of the first electronic device 100 is automatically set by the auto-setting application stored in the storage device 100. If the storage device 100 is connected to the second electronic device 20, a network environment of the second electronic device 20 is automatically set by the auto-setting application stored in the storage device 100.

If the first electronic device 10 and the second electronic device 20 are set to belong to the same group and the same network, the first electronic device 10 and the second electronic device 20 can communicate with each other. The group recited herein refers to a group which consists of a plurality of electronic devices which can identify a shared file and exchange the file with one another, Therefore, the first electronic device 10 and the second electronic device 20 belonging to the same group can exchange their files with each other and identify shared data.

As described above, the storage device 100 stores the auto-setting application and the auto-setting application automatically sets a network environment of electronic devices. Accordingly, a user can set a network environment simply by connecting the storage device 100 to the electronic device.

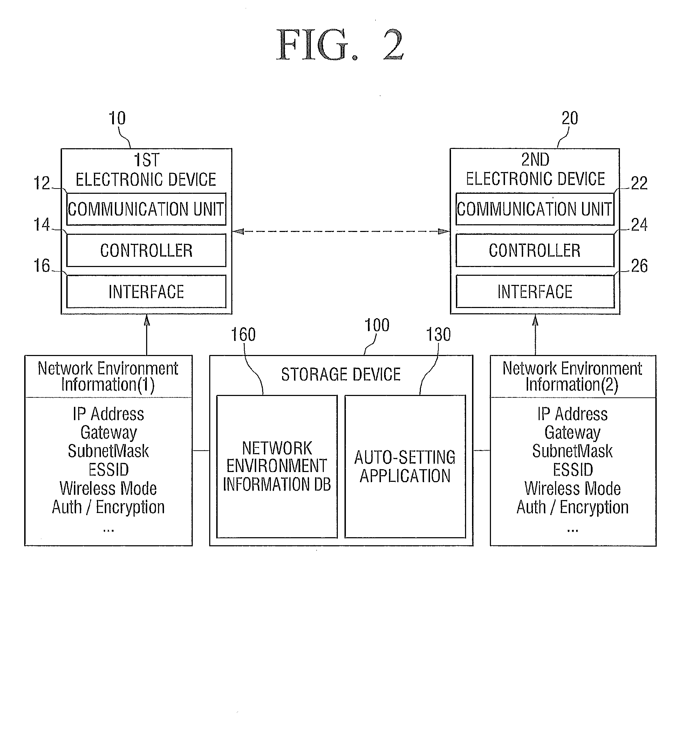

FIG. 2 is a block diagram illustrating the first electronic device 10, the second electronic device 20, and the storage device 100 according to an exemplary embodiment.

As shown in FIG. 2, the first electronic device 10 includes a communication unit 12, a controller 14, and an interface 16.

The communication unit 12 is communicably connected to an external device through a network. The communication unit 12 may be connected to a network through a wired LAN or a wireless LAN, and may be connected to a network through any other interface.

The controller 14 controls the entire operation of the first electronic device 10. More specifically, the controller 14 automatically executes the auto-setting application stored in the storage device 100 if the storage device 100 is connected to the interface 16 of the first electronic device 10. Also, the controller 14 controls the auto-setting application to automatically set a network environment of the communication unit 12.

The controller 14 controls set network environment information to be stored in the storage device 100 if the network environment has been completely set.

The interface 16 is connected to the storage device 100 to receive and transmit data from and to the storage device 100. For example, if the storage device 100 is a USB memory, the interface 16 may be a USB port, and if the storage device 100 is a flash memory card, the interface 16 may be a card reader.

As described above, if the storage device 100 is connected to the first electronic device 10, the first electronic device 10 automatically executes the auto-setting application 130 stored in the storage device 100. Accordingly, the first electronic device 10 automatically sets a network environment if the storage device 100 is connected to the first electronic device 10. Also, the first electronic device 10 stores the set network environment information in the storage device 100.

As shown in FIG. 2, the second electronic device 20 includes a communication unit 22, a controller 24, and an interface 26. The second electronic device 20 is similar to the first electronic device 10 in its function and configuration and thus detailed description thereof is omitted.

As shown in FIG. 2, the storage device 100 stores an auto-setting application 130 and a network environment information database (DB) 160.

The auto-setting application 130 is an application to automatically set a network environment of an electronic device. The auto-setting application 130 is automatically executed by the first electronic device 10 if the storage device 100 is connected to the first electronic device 10, and is automatically executed by the second electronic device 20 if the storage device 100 is connected to the second electronic device 20. The auto execution is realized by an operating system of an electronic device. For example, the Microsoft windows XP is operated to automatically execute a specific application stored in a USB memory if the USB memory is connected to the computer on which the Microsoft windows XP is installed. Therefore, the auto-setting application 130 stored in the storage device 100 is automatically executed if the storage device 100 is connected to an electronic device.

The auto-setting application 130 sets a network environment of the first electronic device 10 and the second electronic device 20 with reference to the network environment information DB 160. More specifically, if the storage device 100 is connected to the first electronic device 10, the auto-setting application 130 automatically sets a network environment of the first electronic device 10 and then stores network environment information regarding the first electronic device 10 in the network environment information DB 160. After that, if the storage device 100 is connected to the second electronic device 20, the auto-setting application 130 sets a network environment of the second electronic device 20 with reference to the network environment information of the first electronic device 10 such that the second electronic device 20 belongs to the same network as that of the first electronic device 10 or a different network. The auto-setting application 130 also sets a network group of the second electronic device 20 with reference to the network environment information of the first electronic device 10 such that the second electronic device 20 belongs to the same network group as that of the first electronic device 10 or a different network group. The auto-setting application 130 also stores network set environment information of the second electronic device 20 in the network environment information DB 160 of the storage device 100.

As described above, since the auto-setting application 130 stores the network environment information already set for the electronic device in the network environment information DB 160 of the storage device 100, a network environment of a new electronic device is set in consideration of the already set network environment such that the new electronic device belongs to the same network or a different network by the auto-setting application 130.

The auto-setting application 130 receives a network key from the first electronic device 10 and the second electronic device 20. More specifically, the auto-setting application 130 receives a first key from the first electronic device 10 and a second key from the second electronic device 20. If the first key and the second key are the same, the auto-setting application 130 sets the network environment of the second electronic device 20 such that the second electronic device 20 belongs to the same network as that of the first electronic device 10. Also, if the first key and the second key are the same, the auto-setting application 130 sets the network environment of the second electronic device 20 such that the second device 20 belongs to the same group as that of the first electronic device 10.

The network environment information DB 160 stores network environment information regarding a plurality of electronic devices as a database. Also, the network environment information DB 160 provides a basic template of network environment information to the auto-setting application 130 when the auto-setting application 130 sets a network environment of a new electronic device. If the network environment of the new electronic device has been completely set, the network environment information DB 160 stores network environment information of the new electronic device and updates the database.

As described above, the auto-setting application 130 of the storage device 100 automatically sets the network environment of the first electronic device 10 and the second electronic device 20. Accordingly, the user can set a network environment of an electronic device simply by connecting the storage device 100 to the electronic device.

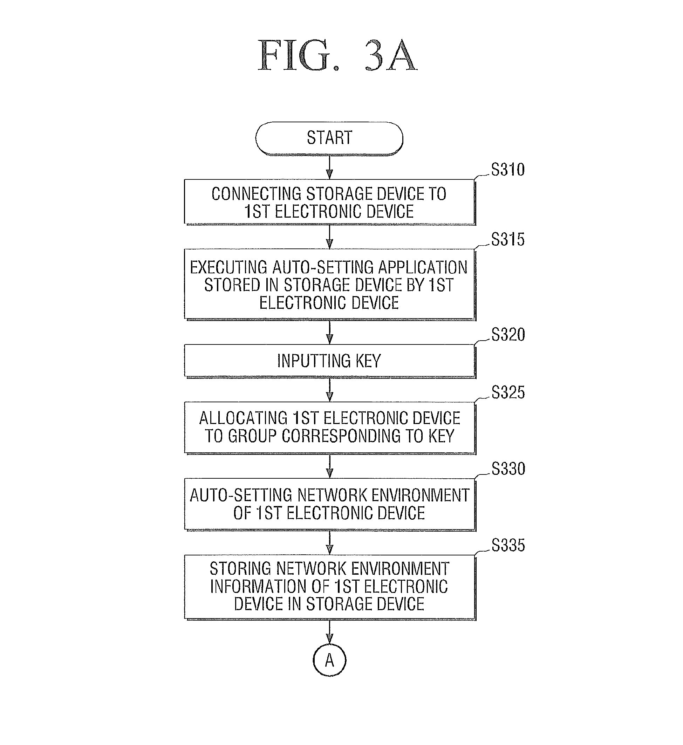

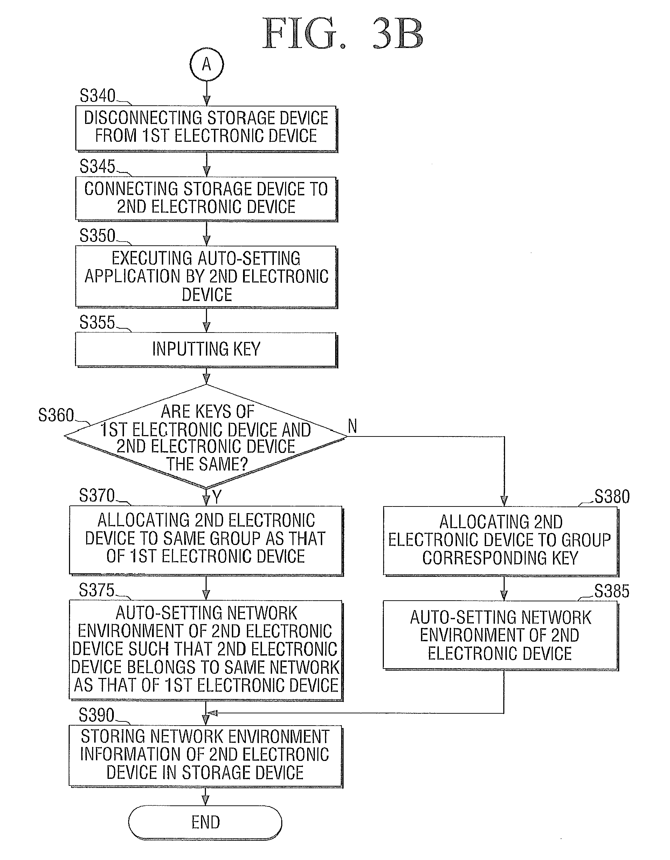

Hereinafter, a method for setting a network environment of the storage device 100 will be described in detail with reference to FIGS. 3A and 3B. FIGS. 3A and 3B are flowcharts illustrating a method for setting a network environment by the auto-setting application 130 stored in the storage device 100 according to an exemplary embodiment.

If the storage device 100 is connected to the first electronic device 10 (operation S310), the first electronic device 10 executes the auto-setting application 130 stored in the storage device 100 (operation S315). Then, the first electronic device 10 receives a first key from the user (operation S320).

The auto-setting application 130 receives the first key from the first electronic device 10 and allocates the first electronic device 10 to a group corresponding to the first key. For example, it is assumed that a key '123ab' corresponds to a group 'A' and a key 'abcde' corresponds to a group 'B'. If the first key received from the first electronic device 10 is '123ab', the auto-setting application 30 allocates the first electronic device 10 to the group 'A'.

The auto-setting application 130 automatically sets a network environment of the first electronic device 10 (operation S330). More specifically, the auto-setting application 130 automatically sets at least one of an IP address, gateway information, sub-net mask information, DNS server information, ESSID, a wireless mode, a network type, authentication mode information, authentication type information and authentication key information of the first electronic device 10 using a network environment information sample received from the network environment information DB 160.

The auto-setting application 130 stores the set network environment information of the first electronic device 10 in the network environment information DB 160 of the storage device 100 (operation S335).

After that, if the storage device 100 is disconnected from the first electronic device 10 (operation S340) and is connected to the second electronic device 20 (operation S345), the second electronic device 20 executes the auto-setting application (operation S350). The second electronic device 20 receives a second key from the user (operation S355).

The auto-setting application 130 determines whether the first key of the first electronic device 10 and the second key of the second electronic device 20 are the same or not (operation S360). If the first key of the first electronic device 10 and the second key of the second electronic device 20 are the same (operation S360-Y), the auto-setting application 130 allocates the second electronic device 20 to the same group as that of the first electronic device 10 (operation S370). For example, it is assumed that the first key of the first electronic device 10 is '123ab'. If the second key received from the second electronic device 20 is '123ab', the auto-setting application 130 allocates the second electronic device 20 to the same group 'A' as that of the first electronic device 10.

The auto-setting application 130 automatically sets a network environment of the second electronic device 20 such that the second electronic device 20 belongs to the same network as that of the first electronic device 10 (operation S375). More specifically, the auto-setting application 130 automatically sets at least one of an IP address, gateway information, sub-net mask information, DNS server information, ESSID, a wireless mode, a network type, authentication mode information, authentication type information, and authentication key information of the second electronic device 20 with reference to the network environment information of the first electronic device 10 stored in the network environment information DB 160.

On the other hand, if the first key of the first electronic device 10 and the second key of the second electronic device 20 are not the same (operation S360-N), the auto-setting application 130 allocates the second electronic device 20 to a group corresponding to the second key (operation S385). For example, it is assumed that the key '123ab' corresponds to the group 'A' and the key 'abcde' corresponds to the group 'B'. Then, if the second key received from the second electronic device 20 is 'abcde', the auto-setting application 130 allocates the second electronic device 20 to the group 'B'.

The auto-setting application 130 automatically sets a network environment of the second electronic device 20 (operation S385). More specifically, the auto-setting application 130 automatically sets at least one of an IP address, gateway information, sub-net mark information, DNS server information, ESSID, a wireless mode, a network type, authentication mode information, authentication type information, and authentication key information of the second electronic device 20 using a network environment information sample received from the network environment information DB 160.

The auto-setting application 130 stores the set network environment information of the second electronic device 20 in the network environment information DB 160 of the storage device 100 (operation S390).

Through the above-described process, the auto-setting application 130 of the storage device 100 automatically sets the network environment of the first electronic device 10 and the second electronic device 20. Accordingly, the user can set a network environment of an electronic device simply by connecting the storage device 100 to the electronic device.

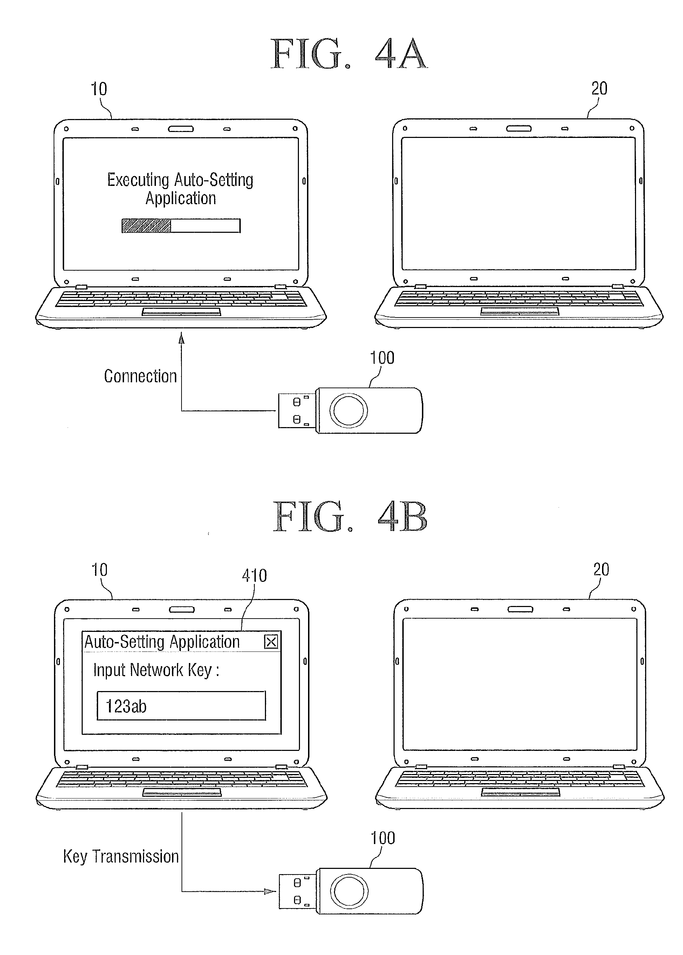

Hereinafter, a process of allowing the first electronic device 10 and the second electronic device 20 to be shared with each other using the storage device 100 will be described in detail with reference to FIGS. 4A to 4G. FIGS. 4A to 4G are views illustrating a process of automatically setting a network of the first electronic device 10 and the second electronic device 20 using the auto-setting application 130 of the storage device 100 such that the first electronic device 10 and the second electronic device 20 are shared with each other according to an exemplary embodiment.

FIG. 4A is a view illustrating the first storage device 100 connected to the first electronic device 10. As shown in FIG. 4A, if the storage device 100 is connected to the first electronic device 10, the first electronic device 10 automatically executes the auto-setting application 130 stored in the storage device 100.

After that, as shown in FIG. 4B, the auto-setting application 130 displays an input window 410 to receive a network key on a screen of the first electronic device 10. Then, the first electronic device 10 receives a network key '123ab' from the user. The first electronic device 10 transmits the input network key to the auto-setting application 130 of the storage device 100.

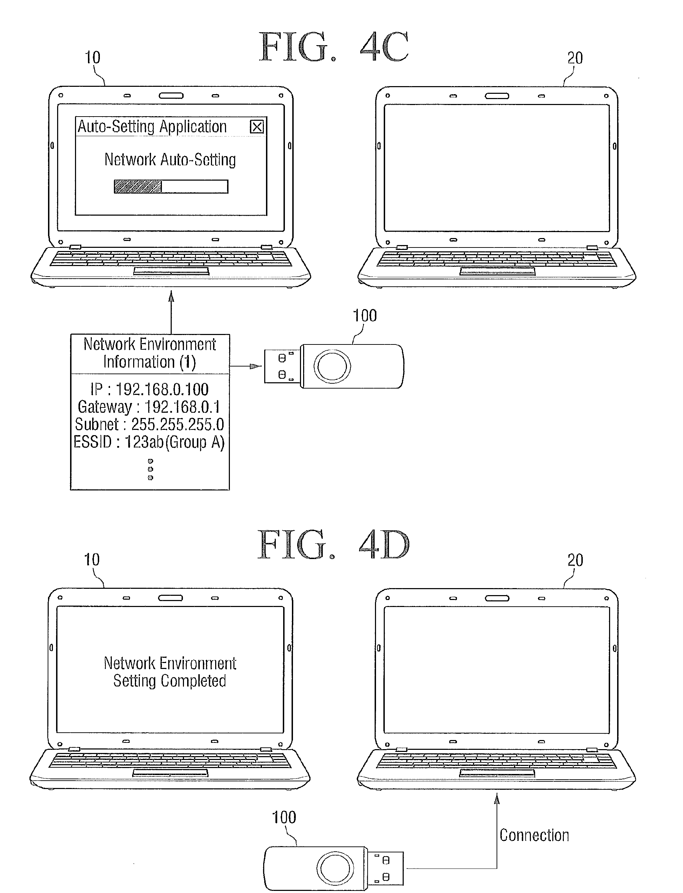

FIG. 4C is a view illustrating a screen in which a network environment is automatically set. As shown in FIG. 4C, if a network key is input, the auto-setting application 130 automatically sets a network environment of the first electronic device 10 based on the input key.

More specifically, the auto-setting application 130 sets the IP address of the first electronic device 10 to 192.168.0.100, the gateway to 192.168.0.1, the subnet to 255.255.255.0, and the ESSID to 123ab. The auto-setting application 130 sets the ESSID to have the same value as the input key such that a group is set using the input key. That is, the network key of the first electronic device 10 is '123ab' and the ESSID is '123ab', and thus the first electronic device 10 is set to belong to the group 'A'.

The storage device 100 may be disconnected from the first electronic device 10 after having been connected to the first electronic device 10 and setting a network environment of the first electronic device 10. The first electronic device 10 maintains the set network environment as it is.

After that, as shown in FIG. 4D, the user connects the storage device 100 to the electronic device 20. If the storage device 100 is connected to the second electronic device 20 as shown in FIG. 4D, the second electronic device 20 automatically executes the auto-setting application 130 stored in the storage device 100.

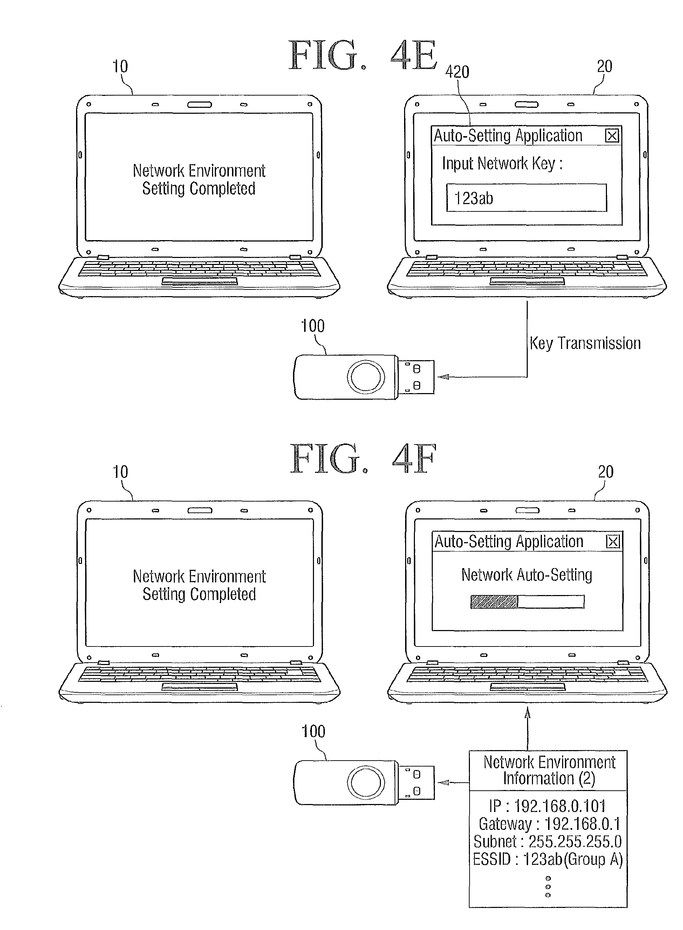

Then, as shown in FIG. 4E, the auto-setting application 130 displays an input window 420 to receive a network key on a screen of the second electronic device. Then, the second electronic device 20 receives a network key from the user.

If the second electronic device 20 receives the same network key '123ab' as that of the first electronic device 10 as shown in FIG. 4E, the auto-setting application 130 allocates the second electronic device 20 to the same group as that of the first electronic device 10 and sets a network environment such that the second electronic device 20 belongs to the same network as that of the first electronic device 10.

Therefore, as shown in FIG. 4F, the auto-setting application 130 sets the network environment of the second electronic device 20 based on the input key such that the second electronic device 20 belongs to the same network as that of the first electronic device 10.

More specifically, the auto-setting application 130 sets the IP address of the second electronic device 20 to 192.168.0.101, the gateway to 192.168.0.1, the sub-net to 255.255.255.0, and the ESSID to 123ab. That is, since the second electronic device 20 is set to have the same gateway as that of the first electronic device 10, the second electronic device 20 is set to belong to the same network. Also, the ESSID of the second electronic device 20 is set to '123ab' such that the second electronic device 20 belongs to the same group 'A' as that of the first electronic device 10.

Once the network environment of the first electronic device 10 and the second electronic device 20 are set using the storage device 100, the first electronic device 10 and the second electronic device 20 are able to use the network. Also, since the first electronic device 10 and the second electronic device 20 are set to belong to the same group and the same network, the first electronic device 10 and the second electronic device 20 are communicably connected to each other such that they are shared with each other.

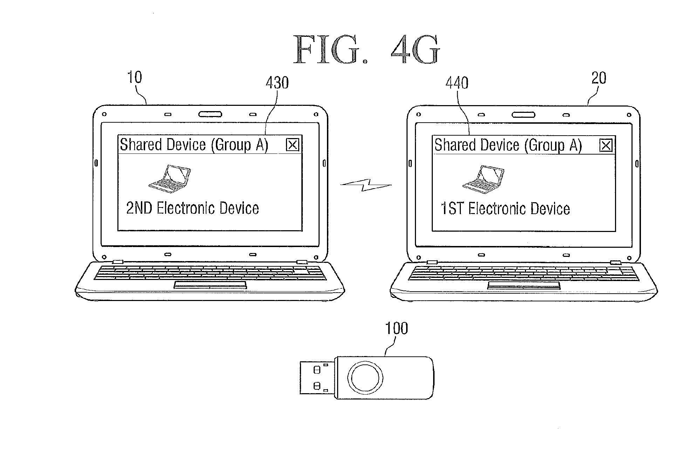

FIG. 4G is a view illustrating the first electronic device 10 and the second electronic device 20 which can be shared with each other. As shown in FIG. 4G, if the first electronic device 10 identifies which device is shared (that is, which device belongs to the group 'A') through a shared device display window 430, the second electronic device 20 is displayed. Also, if the second electronic device 20 identifies which device is shared (that is, which device belongs to the group 'A') through a shared device display window 440, the first electronic device 10 is displayed.

Through the above-described process, the auto-setting application 130 of the storage device 100 automatically sets the network environment of the first electronic device 10 and the second electronic device 20 such that the first electronic device 10 and the second electronic device 20 share the network environment with each other. Therefore, the user can set a network environment of an electronic device simply by connecting the storage device 100 to the electronic device.

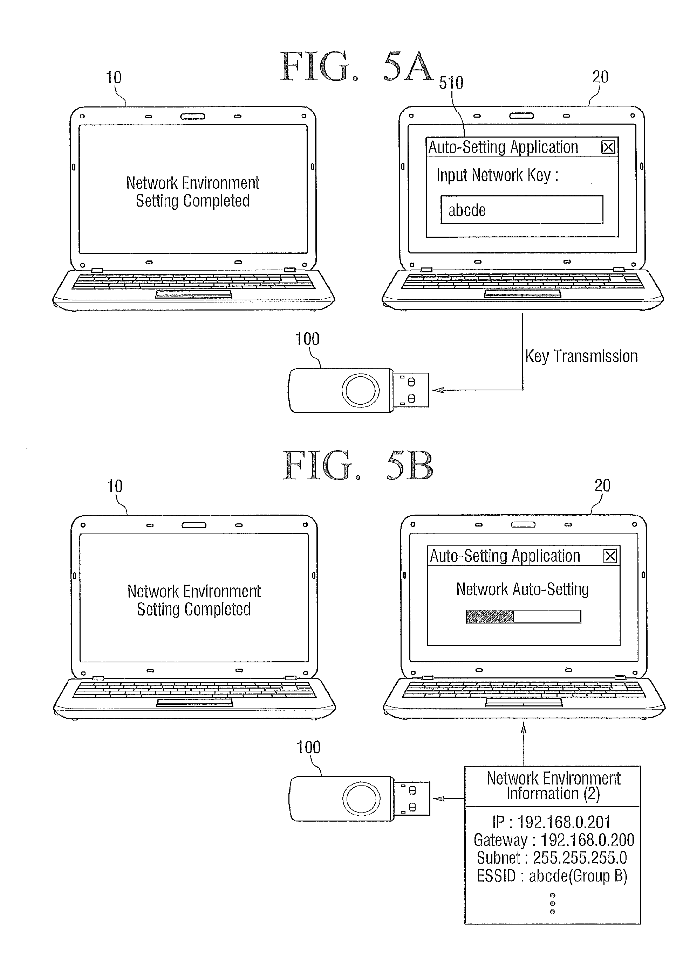

FIGS. 5A to 5C are views illustrating a case where different keys are input to the first electronic device 10 and the second electronic device 20 according to an exemplary embodiment.

FIG. 5A illustrates the next operation of the operations illustrated in FIGS. 4A to 4D. As shown in FIG. 5A, the auto-setting application 130 displays an input window 510 to receive a network key on a screen of the second electronic device 20. Then, the second electronic device 20 receives a network key from the user.

For example, if the second electronic device 20 receives a network key 'abcde', which is different from the network key '123ab' of the first electronic device 10, from the user as shown in FIG. 5A, the auto-setting application 130 allocates the second electronic device 20 to a different group from that of the first electronic device 10, and sets a network environment such that the second electronic device 20 belongs to a different network.

Accordingly, as shown in FIG. 5B, the auto-setting application 130 sets the network environment of the second electronic device 20 based on the input key such that the second electronic device 20 belongs to a different network from that of the first electronic device 10.

More specifically, the auto-setting application 130 sets the IP address of the second electronic device 20 to 192.168.0.201, the gateway to 192.168.0.200, the sub-net 255.255.255.0, and the ESSID to 'abcde'. That is, the second electronic device 20 is set to have a different gateway from that of the first electronic device 10 such that the second electronic device 20 belongs to a different network. Also, since the ESSID of the second electronic device 20 is set to 'abcde', the second electronic device 20 belongs to a different group 'B'.

As described above, once the network environment of the first electronic device 10 and the second electronic device 20 is set using the storage device 100, the first electronic device 10 and the second electronic device 20 are able to use the network. Also, since the first electronic device 10 and the second electronic device 20 are set to belong to different groups and different networks, the first electronic device 10 and the second electronic device 20 cannot share with each other.

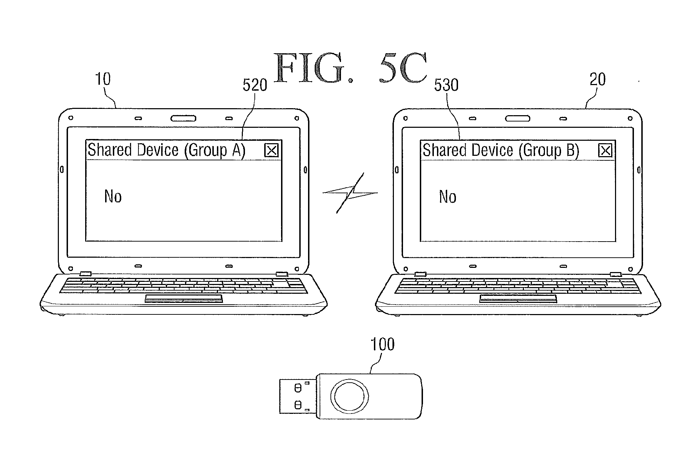

FIG. 5C illustrates the first electronic device 10 and the second electronic device 20 which are not set to be shared with each other. As shown in FIG. 5C, the first electronic device 10 identifies that no device is shared (that is, no device belongs to the group 'A') through a shared device display window 520. Also, the second electronic device 20 identifies that no device is shared (that is, no device belongs to the group 'B') through a shared device display window 530.

Through the above-described process, the auto-setting application 130 of the storage device 100 automatically sets the network environment of the first electronic device 10 and the second electronic device 20 such that the first electronic device 10 and the second electronic device cannot share the network environment with each other.

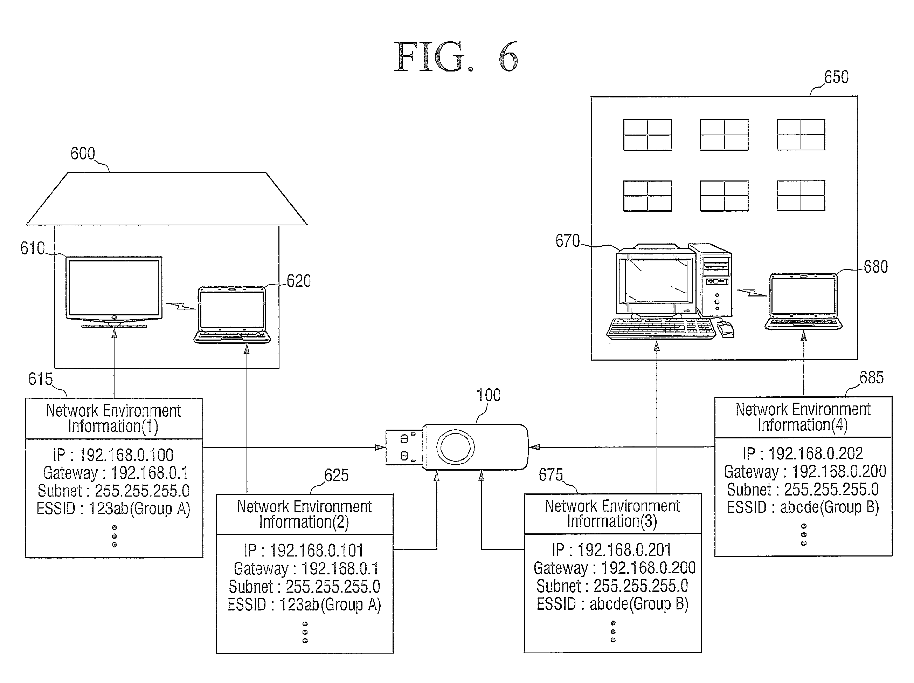

FIG. 6 is a view illustrating a network which is set using the storage device to connect electronic devices within a home and an office according to an exemplary embodiment.

As shown in FIG. 6, the home 600 has a television (TV) 610 and a first lap top computer 620, and the office 650 has a personal computer (PC) 670 and a second lap top computer 680.

The user can set a network environment simply by connecting and disconnecting the storage device 100 to the TV 610, the first lap top computer 620, the PC 670, and the second lap top computer 680 one time for each device. Also, a first key is allocated to the TV 610 and the first lap top computer 620 within the home 600, and a second key, different from the first is allocated to the PC 670 and the second lap top computer 680 within the office 650, such that the home 600 and the office 650 belong to different groups. In FIG. 6, the home 600 belongs to the group 'A', whereas the office 650 belongs to the group 'B'.

As described above, the user can set and manage the network environment of a plurality of electronic devices simply by connecting and disconnecting the storage device 100 to and from the electronic devices.

It should be noted that the auto-setting application 130 is not limited by its name.

Also, any electronic device can be applied if it can be connected to a network and a storage device and can execute an application. For example, a TV, a PC, a lap top computer, a personal digital assistant (PDA), and a mobile phone can be applied.

According to the diverse exemplary embodiments described above, if the storage device 100 is connected to the first electronic device 10, the first electronic device 10 executes a specific application and the specific application sets a network environment of the first electronic device 10 and network environment information of the first electronic device 10 in the storage device 100. Accordingly, the user can automatically set the network environment of diverse electronic devices using the storage device 10.

The foregoing exemplary embodiments are merely exemplary and are not to be construed as limiting the exemplary embodiments. The present teaching can be readily applied to other types of apparatuses. Also, the description of the exemplary embodiments are intended to be illustrative, and not to limit the scope of the claims, and many alternatives, modifications, and variations will be apparent to those skilled in the art.

## Claims

1. A method for setting a network, the method comprising:
connecting a storage device to a first electronic device;
executing, by the first electronic device, an application stored in the storage device;
setting, by the application, a network environment of the first electronic device; and
storing, by the application, set network environment information of the first electronic device in the storage device.

2. The method as claimed in claim 1, further comprising:
connecting the storage device to a second electronic device after the storage device is connected to the first electronic device;
executing, by the second electronic device, the application;
setting, by the application, a network environment of the second electronic device based on the network environment information of the first electronic device; and
storing, by the application, set network environment information of the second electronic device.

3. The method as claimed in claim 2, further comprising:
receiving, by the application, a first key from the first electronic device; and
receiving, by the application, a second key from the second electronic device,
wherein, in the operation of setting the network environment of the second electronic device, if the first key and the second key are the same, the application sets the network environment of the second electronic device such that the second electronic device belongs to a same network as that of the first electronic device.

4. The method as claimed in claim 2, further comprising setting, by the application, a group of the first electronic device and a group of the second electronic device.

5. The method as claimed in claim 4, further comprising:
receiving, by the application, a first key from the first electronic device; and
receiving, by the application, a second key from the second electronic device,
wherein, in the operation of setting the group, if the first key and the second key are the same, the application sets the first electronic device and the second electronic device to belong to a same group.

6. The method as claimed in any one of claims 1 to 5, wherein the network environment information comprises at least one of a set IP address, gateway information, sub-net mask information, domain name service (DNS) server information, extended service set identification (ESSID), a wireless mode, a network type, authentication mode information, authentication type information, and authentication key information.

7. The method as claimed in any one of claims 1 to 6, wherein the storage device is a Universal Serial Bus (USB) memory or a flash memory card.

8. The method as claimed in any one of claims 1 to 7, wherein the network environment is a wireless local area network (LAN) network environment.

9. A storage device which stores an application for executing a method for setting a network, the method comprising:
connecting the storage device to a first electronic device;
setting a network environment of the first electronic device; and
storing set network environment information of the first electronic device in the storage device.

10. The storage device as claimed in claim 9, wherein the method further comprises:
connecting the storage device to a second electronic device after the storage device is connected to the first electronic device;
setting a network environment of the second electronic device based on the network environment information of the first electronic device; and
storing set network environment information of the second electronic device in the storage device.

11. The storage device as claimed in claim 10, wherein the method further comprises:
receiving a first key from the first electronic device; and
receiving a second key from the second electronic device,
wherein the operation of setting the network environment of the second electronic device sets the network environment of the second electronic device such that the second electronic device belongs to a same network as that of the first electronic device if the first key and the second key are the same.

12. The storage device as claimed in claim 10, wherein the method further comprises setting a group of the first electronic device and a group of the second electronic device.

13. The storage device as claimed in claim 12, wherein the method further comprises:
receiving a first key from the first electronic device; and
receiving a second key from the second electronic device,
wherein setting the group sets the first electronic device and the second electronic device to belong to a same group if the first key and the second key are the same.

14. The storage device as claimed in any one of claims 9 to 13, wherein the network environment information comprises at least one of a set IP address, gateway information, sub-net mask information, domain name service (DNS) server information, extended service set identification (ESSID), a wireless mode, a network type, authentication mode information, authentication type information, and authentication key information.

15. The storage device as claimed in any one of claims 9 to 14, wherein the storage device is a Universal Serial Bus (USB) memory or a flash memory card.
